Europäisches Patentamt

European Patent Office

Office européen des brevets

(19)

(11) Numéro de publication: **0 091 058**
**B1**

(12) ## FASCICULE DE BREVET EUROPEEN

(45) Date de publication du fascicule du brevet:
**16.07.86**

(51) Int. Cl.⁴: **B 65 G 1/04**

(21) Numéro de dépôt: **83103057.2**

(22) Date de dépôt: **28.03.83**

(54) **Dispositif et procédé pour le rangement et/ou la mise à disposition d'objets.**

(30) Priorité: **02.04.82 FR 8206105**

(43) Date de publication de la demande:
**12.10.83 Bulletin 83/41**

(45) Mention de la délivrance du brevet:
**16.07.86 Bulletin 86/29**

(84) Etats contractants désignés:
**AT BE CH DE GB IT LI LU NL SE**

(56) Documents cités:
**FR - A - 1 573 662**
**FR - A - 1 575 409**
**FR - A - 2 221 363**
**US - A - 3 595 412**
**US - A - 3 786 944**
**US - A - 3 938 190**
**US - A - 4 285 623**

(73) Titulaire: **MAATEL Société Anonyme dite:, 12, rue Ampère, F-38000 Grenoble (FR)**

(72) Inventeur: **Josserand, Marie-Renée, née Laurent, Champ Chabert - La Buisse, F-38500 Voiron (FR)**

(74) Mandataire: **Casalonga, Axel et al, BUREAU D.A. CASALONGA OFFICE JOSSE & PETIT Morassistrasse 8, D-8000 München 5 (DE)**

ACTORUM AG

# Description

La présente invention concerne un dispositif pour le rangement et/ou la mise à disposition d'objets.

Actuellement, les objets tels que notamment les cassettes, les bandes, les livres ou tous autres articles sont rangés dans des casiers ou dans des armoires et les opérations qui consistent à effectuer le rangement, l'extraction, le repérage ou la classification des objets s'effectuent en général manuellement. Il en résulte notamment une grande perte de temps due à la recherche d'un objet particulier et une méconnaissance des objets rangés. En outre, actuellement la location d'objets tels que des cassettes vidéo ou des livres tend à augmenter considérablement. Pour les loueurs de tels objets, il apparaît en conséquence des problèmes de rangement et de gestion de leurs stocks.

Afin de répondre à ces problèmes, on a toutefois déjà proposé, dans le brevet US-A-3 595 412, un procédé pour transporter des objets entre une desserte et des emplacements d'un ensemble de supports de rangement qui consiste, en vue du rangement, à repérer l'objet, sélectionner un emplacement inoccupé et transporter l'objet jusqu'à cet emplacement et qui consiste, en vue de la mise à disposition, à transporter l'objet jusqu'à la desserte et repérer l'emplacement qu'il occupait. Cependant, dans ce procédé, les informations relatives à l'objet sont portées par une carte indépendante de l'objet. Il s'ensuit qu'un grand nombre d'opérations manuelles sont encore nécessaires, que des risques d'erreur dans les manipulations sont encores possibles et qu'on n'atteint pas encore une grande souplesse dans l'emploi du procédé et du dispositif associé.

Afin de répondre aux problèmes posés par l'état de la technique, la présente invention propose un dispositif pour transporter individuellement des objets entre une desserte et les emplacement d'un ensemble de supports de rangement qui est très simple d'emploi, dont les opérations manuelles à effectuer sont limitées à la pose ou à la reprise de l'objet et qui peut être automatique.

Ce résultat peut être atteint grâce au fait que le dispositif selon la présente invention, pour transporter individuellement les objets entre une desserte et les emplacements d'un ensemble de supports de rangement présentant une face d'accès, devant laquelle l'objet à transporter est déplacé, par des moyens de transport comprenant un chariot de transfert des objets, comprend un ensemble de circuits électroniques de commande desdits moyens de déplacement et de gestion des emplacements libres et/ou occupés de l'ensemble de supports de rangement, cet ensemble de circuits électroniques comprenant un ensemble de mémoires en vue du stockage d'un code d'identification de chacun des objets rangés dans ledit ensemble de supports de rangement ainsi que le repère de chacun des emplacements occupés de cet ensemble de supports de rangement par ces objets, en vue de pouvoir disposer aux emplacements inoccupés de l'ensemble de supports de rangements des objets à ranger et/ou en vue d'extraire un objet particulier sélectionné de l'ensemble de supports de rangement, et que, conformément à la présente invention, le code d'identification de chacun des objets susceptibles d'être rangés dans ledit ensemble de supports de rangement est porté par l'objet lui-même et des moyens de lecture du code porté par chacun des objets à ranger et/ou à extraire sont prévus et sont portés par le chariot desdits moyens de transport.

Conformément à la présente invention, ledit ensemble de circuits électroniques comprend de préférence une interface pour composer le code d'appel d'un des objets disposés dans ledit ensemble de supports de rangement et/ou l'ordre de rangement d'un objet ainsi qu'un micro-ordinateur relié à l'interface et à l'ensemble de mémoires et capable de commander lesdits moyens de déplacement en vue d'aller chercher l'objet dont le code a été composé sur l'interface et/ou en vue de transporter un objet à ranger jusqu'à un emplacement inoccupé préalablement sélectionné dudit ensemble de supports de rangement.

Conformément à la présente invention, lesdits moyens de déplacement desdits objets, individuellement, comprennent de préférence des moyens pour déplacer ledit chariot devant la face d'accès dudit ensemble de supports de rangement et des moyens d'entraînement pour déplacer l'objet porté par le chariot, du chariot jusqu'à son emplacement dans l'ensemble de supports de rangement et réciproquement.

Conformément à la présente invention, lesdits moyens pour déplacer ledit chariot comprennent de préférence une poutre le long de laquelle ledit chariot est mobile, des moyens de guidage le long desquels ladite poutre est mobile sensiblement parallèlement à elle-même, des moyens d'entraînement pour déplacer ledit chariot le long de ladite poutre et des moyens d'entraînement pour déplacer ladite poutre le long desdits moyens de guidage.

Conformément à la présente invention, lesdits moyens d'entraînement pour déplacer l'objet du chariot jusque dans l'ensemble de supports de rangement et réciproquement sont portés par ledit chariot et comprennent une courroie munie d'un doigt susceptible de pénétrer dans un évidement de l'objet en vue de déplacer ce dernier ainsi que des moyens pour entraîner cette courroie dans les deux sens.

La présente invention sera mieux comprise à l'étude d'un dispositif destiné au rangement et à la mise à disposition d'objets décrit à titre d'exemple non limitatif et illustré schématiquement par le dessin sur lequel:

– La figure 1 représente une vue en élévation du dispositif;

– La figure 2 représente une vue transversale selon II–II du dispositif représenté sur la figure 1;

– La figure 3 représente une vue agrandie d'une partie du dispositif représenté sur les figures 1 et 2 et selon II–II de la figure 1;

– Et la figure 4 représente le synoptique d'un ensemble de circuits électroniques destiné à la commande de l'appareil représenté sur les figures 1 à 3.

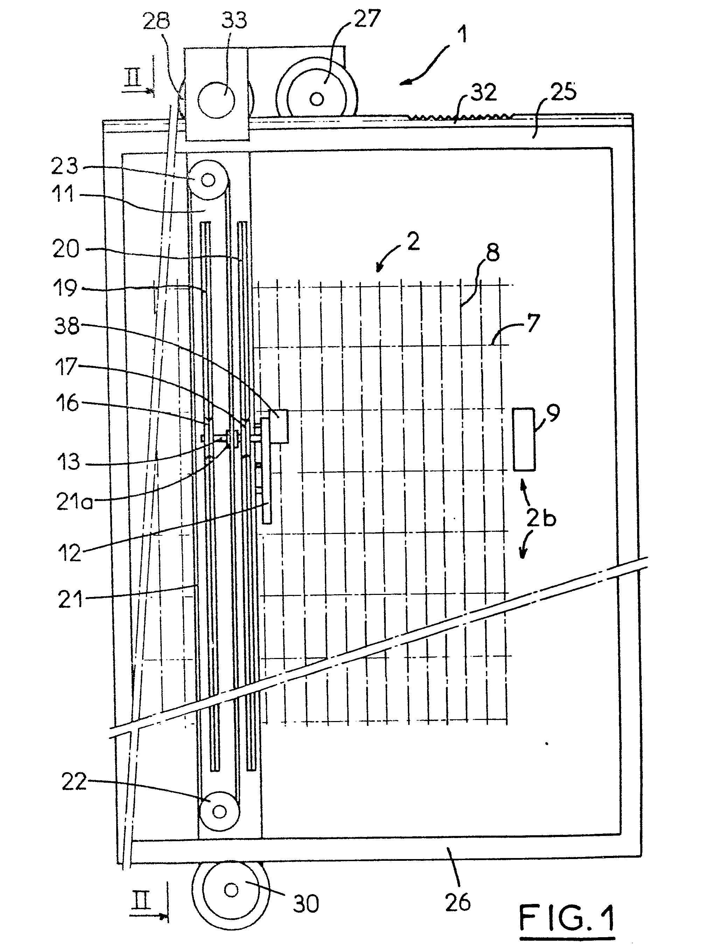

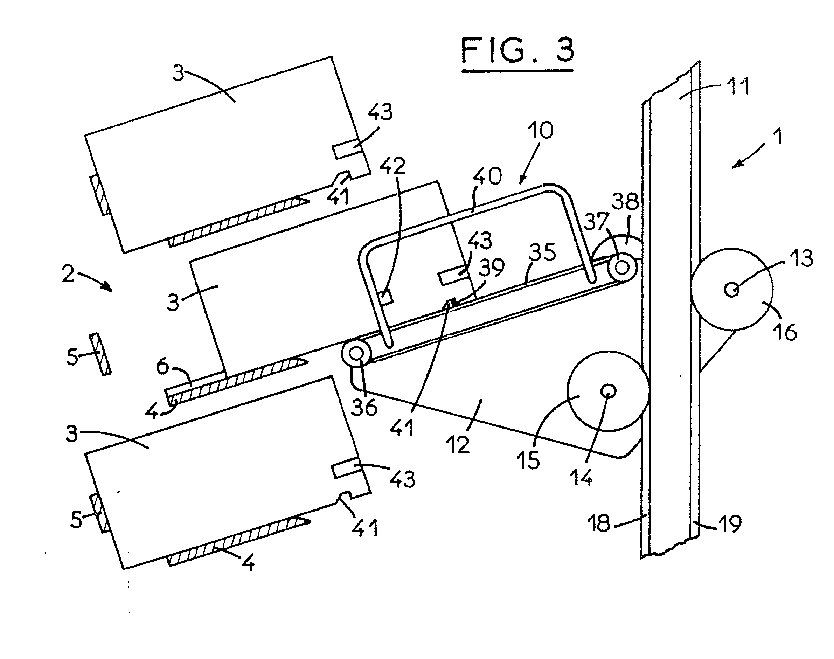

Le dispositif pour le rangement et la mise à disposition d'objets représenté sur les figures 1 à 3 est repéré d'une manière générale par la référence 1. Ce dispositif est associé à un ensemble de supports de rangement repéré d'une manière générale par la référence 2. Dans l'exemple, les objets à ranger et à extraire de l'ensemble de supports de rangement 2 sont des blocks parallélépipédiques 3 visibles sur la figure 3 qui peuvent être des coffrets contenant par exemple chacun une cassette.

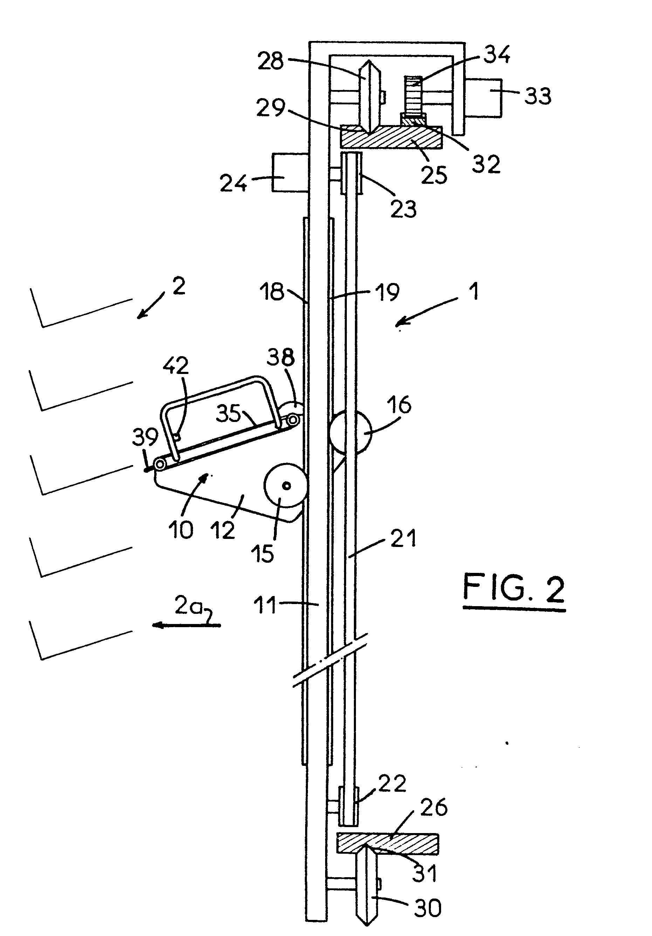

Comme on peut le voir sur la figure 3, l'ensemble de supports de rangement 2 comprend une série d'étagères horizontales placées les unes au-dessus des autres. Chaque étagères comprend une plaque-support 4 et une plaque arrière 5 qui sont perpendiculaires de manière à former un V ouverts vers le haut, la plaque-support 4 étant inclinée légèrement vers l'arrière de telle sorte que l'objet 3 disposé sur cette plaque-support est maintenu par son propre poids en contact avec la plaque arrière 5 qui forme une butée. Les plaques 4 et 5 étant disposées à distance les unes au-dessus des autres, l'ensemble de supports de rangement 2 présente une face d'accès verticale repérée par la flèche 2a visible sur la figure 2.

Comme on peut le voir sur la figure 3, les plaques-supports 4 présentent des nervures transversales 6 qui délimitent des creux dans lesquels peuvent être disposés les objets 3 en appui sur un de leurs champs et perpendiculairement aux étagères.

En se reportant à la figure 1, on voit que dans l'exemple les étagères sont conçues de telle sorte que les objets 3 peuvent être disposés dans l'ensemble de supports de rangement 2 selon des lignes horizontales 7 et selon des lignes verticales 8.

A l'ensemble de supports de rangement 2 est associée une desserte 9 représentée schématiquement sur la figure 1 par un rectangle. Cette desserte 9 est destinée à recevoir uniquement un objet 3 dans la même position par rapport à ladite face d'accès verticale 2a que celle qu'il peut occuper dans l'ensemble de supports de rangement 2. A la verticale de cette desserte 9, l'ensemble de supports de rangement présente une colonne libre repérée sur la figure 1 par la référence 2b. La desserte 9 peut être formée par une portion d'étagère.

Le dispositif 1 est destiné à transporter individuellement les objets 3 depuis la desserte 9 jusqu'à l'un des emplacements de l'ensemble de supports de rangement 2 ou réciproquement à transporter un objet 3 disposé dans l'ensemble de supports de rangement jusqu'à la desserte 9.

Dans ce but, le dispositif 1 comprend un chariot repéré d'une manière générale par la référence 10 qui peut se déplacer devant la face 2a d'accès à l'ensemble de supports de rangement 2. Le chariot 10 est mobile le long d'une poutre ou montant vertical 11. Le chariot 10 présente une plaque transversale porteuse 12 s'étendant verticalement d'un côté du montant 11 et portant, du côté du montant 11, deux axes horizontaux 13 et 14, l'axe 14 étant placé du côté de l'ensemble de supports de rangement 2 et portant un galet 15 tandis que l'axe 13 est placé de l'autre côté du montant 11 et porte deux galets verticaux 16 et 17. Les galets 15, 16 et 17 présentent une gorge périphérique annulaire et peuvent rouler en étant guidés respectivement sur des rails 18, 19 et 20 qui sont montés verticalement sur le montant 11.

En vue de déplacer verticalement le chariot 10, on a prévu une courroie crantée 21, qui pourrait être remplacée par une chaîne, dont les brins sont verticaux et qui s'enroule autour d'une poulie inférieure 22 qui est montée sur le montant 11 et d'une poulie supérieure 23 susceptible d'être entraînée en rotation par un moteur électrique 24 fixé au montant 11. L'un des brins de la courroie crantée 21 est fixé au chariot de telle sorte que lorsque le moteur électrique 24 est actionné, la courroie crantée 21 déplace verticalement le chariot 10 le long des rails 18, 19 et 20 que porte le montant 11. Dans l'exemple, ledit brin de la courroie crantée 21 est fixé à l'axe 13 en 21a.

Le dispositif 1 présente également une traverse horizontale supérieure 25 et une traverse inférieure horizontale 26 qui sont parallèles à ladite face d'accès 2a. L'extrémité supérieure du montant 11 porte deux galets 27 et 28 qui pénètrent dans une gorge 29 ménagée longitudinalement sur la face supérieure de la traverse 25 et l'extrémité inférieure du montant 11 porte un galet 30 qui pénètre dans une rainure 31 ménagée longitudinalement sur la face inférieure de la traverse inférieure 26 de telle sorte que le montant 11 est mobile horizontalement le long des traverses 25 et 26 pour se déplacer parallèlement à lui-même devant la face 2a d'accès à l'ensemble de supports de rangement 2. En vue de l'entraînement en translation du montant 11, la traverse supérieure 25 porte une crémaillère 32 qui s'étend parallèlement à la rainure 29 et la partie supérieure du montant 11 porte un moteur électrique 33 dont l'axe de rotation porte une roue crantée 34 engrenant avec la crémaillère 32. En actionnant le moteur 33, le montant 11 peut en conséquence être déplacé.

Il résulte de la description qui précède que le chariot 10, en actionnant les moteurs électriques 24 et 33, peut être déplacé en vue d'occuper n'importe quelle position devant la face 2a d'accès à l'ensemble de supports de rangement 2.

En se reportant notamment à la figure 3, on voit que le chariot 10 porte une courroie sans fin 35 qui est montée sur deux poulies 36 et 37, la poulie 36 située du côté de l'ensemle de supports de rangement 2 étant montée tournante sur la plaque 12 tandis que la poulie 37 située du côté du montant 11 est portée par l'axe d'un moteur électrique 38 fixé à cette plaque 12. Le brin supérieur de la courroie crantée 35 présente la même inclinaison que les plaques-supports 4 formant les étagères de l'ensemble de supports de rangement 2. En outre, la courroie crantée 35 porte un doigt 39 s'étendant vers l'extérieur. Le chariot 10 présente également deux guides 40 qui sont fixés à la plaque 12 et qui délimitent entre eux un couloir s'étendant au-dessus du brin supérieur de la courroie crantée 35.

On voit sur la figure 3 que lorsque le chariot 10 est placé devant l'ensemble de supports de rangement 2 de telle sorte que le brin supérieur de la courroie crantée 35 soit sensiblement en alignement avec la face supérieur de la plaque-support 4 d'une étagère, en actionnant le moteur électrique 38 pour faire tourner la courroie crantée 35 dans le sens qui correspond à la montée du doigt 39 qu'elle porte, ce doigt 39 pénètre dans un évidement 41 que présente le champ inférieur de l'objet 3 qui est en appui sur la plaque-support 4 et extrait l'objet 3 de l'emplacement qu'il occupe dans l'ensemble de supports de rangement 2 pour le disposer sur le chariot 10. L'opération inverse qui consiste à transférer l'objet 3 du chariot 10 jusqu'à un emplacement de l'ensemble de supports de rangement 2 peut être effectuée en faisant tourner la courroie crantée 35 dans l'autre sens. Sur la figure 3, un objet 3 a été représenté dans une position intermédiaire à cheval sur la plaque-support 4 et sur le chariot 10.

Le dispositif représenté sur les figures 1 à 3 peut être utilisé pour effectuer le rangement d'objets 3 dans l'ensemble de supports de rangement 2 ou pour extraire un objet 3 de cet ensemble de supports de rangement 2.

Pour effectuer le rangement d'un objet 3, le chariot 10 étant disposé en face de la desserte 9, on dépose dans cette desserte cet objet à ranger de telle sorte que son champ présentant l'évidement 41 soit au-dessous et du côté du chariot 10, l'objet occupant, dans cette desserte 9, sensiblement la même position que celle qu'il occuperait dans l'ensemble de supports de rangement 2.

On actionne le moteur électrique 38 de manière à faire tourner la courroie crantée 35 dans un sens tel que le doigt 39 qu'elle porte pénètre dans l'évidement 41 de l'objet et entraine cet objet de manière à le disposer sur le chariot 10. Quand l'objet à ranger a quitté la desserte 9 et est disposé sur le chariot 10, on arrête le moteur électrique 38. L'objet disposé sur le chariot 10 est maintenu dans le sens transversal par le doigt 39 que porte la courroie crantée 35 et latéralement par les guides 40.

Ensuite, on actionne le moteur électrique 24 de manière à déplacer verticalement, dans la colonne libre 2b, le chariot 10 le long du montant 11 en vue de placer l'objet à ranger au niveau de l'une des plaques-supports 4 sur laquelle on souhaite déposer l'objet.

On actionne ensuite le moteur électrique 33 de manière à déplacer le montant 11 parallèlement à lui-même le long des traverses horizontales 25 et 26 devant la face d'accès de l'ensemble de supports de rangement 2. Lorsque l'objet 3 à ranger se trouve en face de l'emplacement où l'on désire le déposer, on stoppe le moteur électrique 33.

En actionnant alors le moteur 38 dans l'autre sens, la courroie crantée 35 déplace l'objet vers l'ensemble de supports de rangement 2 de telle sorte que ce dernier glisse sur la plaque-support 4 de l'étagère correspondante et vient en butée contre sa plaque arrière 5. En fin de course, le doigt 39 que porte la courroie crantée 35 se dégage vers le bas de l'évidement 41 de l'objet.

Pour effectuer l'opération inverse qui consiste à prendre un objet à extraire dans l'ensemble de supports de rangement 2 pour l'amener dans la desserte 9, il suffit d'effectuer les opérations inverses en amenant tout d'abord le chariot 10 en face de l'objet à extraire.

Le dispositif 1 comprend également un lecteur optique 42 qui est porté par le chariot 10 et qui permet de lire le code que porte latéralement en 43 chacun des objets 3. La lecture de ce code peut donc être effectuée lorsque l'objet 3 est déplacé par la courroie crantée 35 devant le lecteur 42. Chacun des objets 3 peut également porter un code sur sa face avant que le lecteur optique 42 pourra lire lorsque le chariot 10 sera déplacé horizontalement grâce au moteur électrique 33.

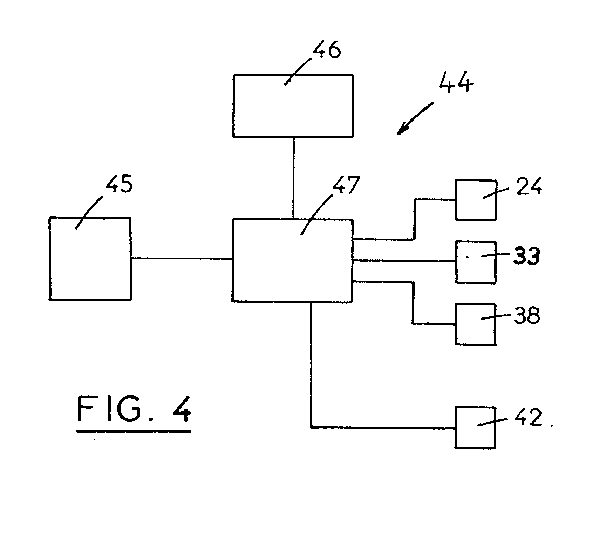

Au dispositif 1 et à l'ensemble de supports de rangement 2 est associé un ensemble de circuits électroniques de gestion et de commande représenté sur la figure 4 et repéré d'une manière générale par la référence 44.

Cet ensemble électronique 44 comprend une interface 45 d'introduction de données et de visualisation formée par exemple par un clavier et un écran, un ensemble de mémoires 46 et un micro-ordinateur 47 relié à l'interface 45 et à l'ensemble de mémoires 46 et relié également au lecteur de codes 42 ainsi qu'aux commandes des moteurs électriques 24, 33 et 38. Avantageusement, ces moteurs électriques sont des moteurs pas-à-pas.

Le micro-ordinateur 47 est conçu pour être capable de gérer les ordres introduits manuellement par l'interface 45, l'ensemble de mémoires 46, le lecteur de codes 42 et la commande des moteurs électriques 24, 33 et 38.

On va maintenant décrire des exemples de fonctionnement du dispositif 1 en relation avec l'ensemble de circuits électroniques 44.

On peut indiquer tout d'abord que l'ensemble de mémoires 46 peut notamment être prévu pour stocker le code de chacun des objets disposés dans l'ensemble de supports de rangement 2, le repère de l'emplacement occupé dans l'ensemble de supports de rangement 2 par l'objet portant ce code et l'image des emplacements occupés et/ou inoccupés de l'ensemble de supports de rangement 2.

Si l'on désire se faire délivrer dans la desserte 9 l'un des objets 3, on introduit par l'interface 45 le code correspondant à cet objet particulier. Le micro-ordinateur 47 interroge alors l'ensemble de mémoires 46 afin de connaître l'emplacement de cet objet particulier dans l'ensemble de supports de rangement 2. Connaissant le repère de l'emplacement de cet objet particulier, le micro-ordinateur 47 commande les moteurs électriques 24, 33 et 38 pour déplacer le chariot 10 comme on l'a vu précédemment afin de prendre cet objet particulier et l'amener dans la desserte 9. Lorsque cet objet particulier est extrait de l'ensemble de supports de rangement 2 pour être disposé sur le chariot 10. Le lecteur de codes 42 peut lire le code de cet article particulier et le micro-ordinateur 47 peut alors se rendre compte si l'objet extrait correspond à l'objet particulier qui a été demandé. Quand cet article particulier est extrait, le micro-ordinateur 47 remet à jour l'ensemble de mémoires 46 en effaçant par exemple le code de cet article particulier extrait et en mettant à jour l'image des emplacement occupés ou inoccupés dans l'ensemble de supports de rangement 2.

Pour l'opération inverse consistant au rangement dans l'ensemble de supports de rangement 2 d'un objet, on dispose cet objet dans la desserte 9. On introduit par l'interface 45 un ordre de rangement. Le micro-ordinateur 47 sélectionne alors un emplacement libre dans l'ensemble de supports de rangement 2 en interrogeant l'ensemble de mémoires 46. Lorsqu'un emplacement libre particulier est sélectionné, le micro-ordinateur 47 commande alors les moteurs 24, 33 et 38 de manière à déplacer le chariot 10 et à emporter l'objet à ranger jusqu'à l'emplacement sélectionné dans l'ensemble de supports de rangement 2 comme on l'a vu précédemment. Au passage de l'objet devant le lecteur de codes 42, le micro-ordinateur 47 relève le code de l'article à ranger. Le micro-ordinateur 47 peut alors modifier en conséquence le contenu de l'ensemble de mémoires 46.

L'ensemble de circuits électroniques 44 peut remplir bien d'autres fonctions. Par exemple, en interrogeant l'ensemble de mémoires 46 à l'aide de l'interface 45, on peut savoir si un objet particulier est disponible dans l'ensemble de supports de rangement 2 et on peut d'une manière générale connaître le contenu de l'ensemble de supports de rangement 2 ainsi que son degré d'occupation.

Le dispositif qui vient d'être décrit présente bien des avantages et notamment il permet le stockage et la gestion d'objets empruntés tels que des cassettes ou des livres. En outre, on peut noter qu'il peut permettre de gérer un nombre beaucoup plus important d'objets que celui qui correspond au nombre d'emplacements disponibles dans l'ensemble de supports de rangement 2 compte tenu du fait que, au cours du temps, une certaine quantité d'objets sont empruntés pendant que d'autres sont stockés et qu'il s'effectue des roulements entre les objets stockés et les objets empruntés.

La présente invention ne se limite pas à l'exemple ci-dessus décrit. Bien d'autres variantes de l'ensemble du dispositif pour le rangement et/ou pour la mise à disposition d'objets selon la présente invention sont possibles sans sortir du cadre défini par les revendications annexées.

**Revendications**

1. Dispositif pour transporter individuellement des objets entre une desserte et les emplacements d'un ensemble de supports de rangement présentant une face d'accès, devant laquelle l'objet à transporter est déplacé, par des moyens de transport comprenant un chariot de transfert des objets, comprenant un ensemble de circuits électroniques (44) de commande desdits moyens de déplacement et de gestion des emplacements libres et/ou occupés de l'ensemble de supports de rangement (2), cet ensemble de circuits électroniques (44) comprenant un ensemble de mémoires (46) en vue du stockage d'un code d'identification de chacun des objets (3) rangés dans ledit ensemble de supports de rangement (2) ainsi que le repère de chacun des emplacements occupés de cet ensemble de supports de rangement par ces objets, en vue de pouvoir disposer aux emplacements inoccupés de l'ensemble de supports de rangement des objets à ranger et/ou en vue d'extraire un objet particulier sélectionné de l'ensemble de supports de rangement, caractérisé par le fait que le code d'identification de chacun des objets susceptibles d'être rangés dans ledit ensemble de supports de rangement (2) est porté par l'objet lui-même et que des moyens de lecture (42) du code (43) porté par chacun des objets à ranger et/ou à extraire sont prévus et sont portés par ledit chariot (10).

2. Dispositif selon la revendication 1, caractérisé par le fait que ledit ensemble de circuits électroniques (44) comprend une interface (45) pour composer le code d'appel d'un des objets (3) disposés dans ledit ensemble de supports de rangement (2) et/ou l'ordre de rangement d'un objet ainsi qu'un micro-ordinateur (47) relié à l'interface (45) et à l'ensemble de mémoires (46) et capable de commander lesdits moyens de déplacement en vue d'aller chercher l'objet dont le code a été composé sur l'interface (45) et/ou en vue de transporter un objet à ranger jusqu'à un emplacement inoccupé préalablement sélectionné dudit ensemble de supports de rangement (2).

3. Dispositif selon l'une des revendications 1 et 2, caractérisé par le fait que lesdits moyens de déplacement desdits objets, individuellement, comprennent des moyens pour déplacer ledit chariot (10) devant la face d'accès dudit ensemble de supports de rangement (2) et des moyens d'entraînement (39) pour déplacer l'objet porté par le chariot du chariot (10) jusqu'à son emplacement dans l'ensemble de supports de rangement (2) et réciproquement.

4. Dispositif selon la revendication 3, caractérisé par le fait que lesdits moyens pour déplacer ledit chariot comprennent une poutre (11) le long de laquelle ledit chariot (10) est mobile, des moyens de guidage (25, 26, 28, 30) le long desquels ladite poutre est mobile sensiblement parallèlement à elle-même, des moyens d'entraînement (21, 22, 23, 24) pour déplacer ledit chariot (10) le long de ladite poutre (11) et des moyens d'entraînement (32, 33, 34) pour déplacer ladite poutre (11) le long desdits moyens de guidage (25, 26, 28, 30).

5. Dispositif selon l'une des revendications 3 et 4, caractérisé par le fait que lesdits moyens d'entraînement pour déplacer l'objet du chariot jusque dans l'ensemble de supports de rangement et réciproquement sont portés par ledit chariot (10) et comprennent une courroie (35) munie d'un doigt (39) susceptible de pénétrer dans un évidement de l'objet en vue de déplacer ce dernier ainsi que des moyens pour entraîner cette courroie dans les deux sens.

## Patentansprüche

1. Vorrichtung zur Einzelbeförderung von Gegenständen zwischen einem Anlieferplatz und den Stauplätzen einer Lagerungsanordnung mit einer Zugangsseite, vor die der zu befördernde Gegenstand hinbewegt wird, durch Fördermittel, die einen Förderwagen für die Gegenstände mit einer Baugruppe elektronischer Schaltkreise (44) zur Steuerung der genannten Fördermittel sowie für die Verwaltung der freien bzw. belegten Stauplätze in der genannten Lagerungsanordnung (2) umfassen, wobei diese Baugruppe elektronischer Schaltkreise (44) mehrere Speicher (46) zwecks Speicherung einer Kennung für jeden einzelnen Gegenstand (3), der in der genannten Lagerungsanordnung (2) verstaut ist, sowie Speicherung der Kennung für die einzelnen durch die genannten Gegenstände belegten Stauplätze dieser Lagerungsanordnung aufweist, um über die nicht von den Gegenständen belegten Stauplätze der Lagerungsanordnung verfügen zu können, bzw. um einen bestimmten, besonders ausgewählten Gegenstand aus der Lagerungsanordnung auslagern zu können, dadurch gekennzeichnet, dass die Kennung jedes einzelnen Gegenstands, der in der Lagerungsanordnung (2) verstaut werden soll, am betreffenden Gegenstand selbst angebracht ist, und dass Lesemittel (42) für die an den einzelnen zu verstauenden bzw. auszulagernden Gegenständen angebrachte Kennung (43) vorgesehen sind und am genannten Wagen (10) selbst angebracht sind.

2. Vorrichtung gemäss Anspruch 1, dadurch gekennzeichnet, dass die genannte Baugruppe elektronischer Schaltkreise (44) eine Schnittstelle (45) aufweist, um die Kennung eines sich in der genannten Lagerungsanordnung (2) befindlichen bzw. die Zuweisungsordnung eines Gegenstands einzugeben, sowie einen Mikrocomputer (47) umfasst, der an die Schnittstelle (45) sowie an die Gesamtspeicher (46) angeschlossen ist und die genannten Fördermittel steuern kann, so dass diese den genannten Gegenstand suchen, dessen Kennung an der Schnittstelle (45) eingegeben wurde bzw. einen einzulagernden Gegenstand an einen vorgewählten, noch unbelegten Stauplatz der genannten Lagerungsanordnung (2) befördern.

3. Vorrichtung gemäss einem der Ansprüche 1 und 2, dadurch gekennzeichnet, dass die genannten Beförderungsmittel für die genannten Gegenstände jeweils Mittel zur Ortsveränderung des genannten Wagens (10) vor die Zugangsseite der genannten Lagerungsanordnung (2) sowie Mittel (39) zur Verschiebung des vom Wagen (10) getragenen genannten Gegenstands bis an seinen Stauplatz in der Lagerungsanordnung (2) und umgekehrt beinhalten.

4. Vorrichtung gemäss Anspruch 3, dadurch gekennzeichnet, dass die genannten Mittel zur Ortsveränderung des genannten Wagens einen Träger (11), entlang dessen der genannten Wagen (10) beweglich ist, sowie Führungsmittel (25, 26, 28, 30), entlang deren der genannte Träger im wesentlichen parallel zu sich selbst beweglich ist, Zugmittel (21, 22, 23, 24) zwecks Bewegung des genannten Wagens (10) entlang des genannten Trägers (11) sowie Zugmittel (32, 33, 34) zwecks Bewegung des genannten Trägers (11) entlang der genannten Führungsmittel (25, 26, 28, 30) umfassen.

5. Vorrichtung gemäss einem der Ansprüche 3 und 4, dadurch gekennzeichnet, dass die genannten Zugmittel im Wagen (10) zur Ortsveränderung des Gegenstands des Wagens (10) bis in die Lagerungsanordnung und in umgekehrter Richtung von dem genannten Wagen (10) getragen werden und einen Riemen (35) mit einem Finger (39), der in einen Hohlraum am Gegenstand eingreift um diesen letzteren zu bewegen, sowie Mittel zur Bewegung des genannten Riemens in beiden Richtungen umfassen.

## Claims

1. Device for individually conveying objects between a goods inward area and the stow-away places of a stowing rack having an access face in front which the object to be conveyed is moved, by conveying means which comprise a conveying carriage for said objects being equipped with an assembly of electronic circuits (44) for the control of said conveying means and for the management of the free and/or occupied stow-away places within said stowing rack (2), said assembly of electronic circuits (44) comprising a plurality of storage memories (46) for the purpose of storing an identification code for every individual object (3) which is stowed-away in said stowing rack (2) as well as storing an identification code for each stow-away place occupied by said objects in order to be in a position of disposing of the stow-away places of said stowing rack which are not occupied by said objects and/or to extract any preselected determined object out of said stowing rack, characterized in that the identification code of every single object to be stowed-away in said stowing rack (2) is attached to the respective object itself. And that reading means (42) of the identification code (43) attached to be various individual objects to be stowed-away and/or to be extracted are provided and are carried by the said conveying carriage (10).

2. Device according to claim 1 above, characterized in that the said assembly of electronic circuits (44) comprises an interface (45) for entering the identification code of an object (3) being stowed-away in the said stowing rack (2) and/or the stowing sequence of an object and a microcomputer (47) which is connected to said interface (45) and to the main memory (46) and is capable of controlling the said conveying means so that they search for the object the identification code of which was entered on the interface (45) and/or convey an object to be stowed away to a preselected, as yet unoccupied stow-away place of said stowing rack (2).

3. Device according to one of the above claims 1 and 2, characterized in that the said conveying means for the said objects comprise individually means for the displacement of the said carriage (10) in front of said access face of said stowing rack (2) and means (39) for displacing the object carried by said carriage (10) into its stow-away place within said stowing rack (2) and withdrawing it respectively.

4. Device according to claim 3 above, characterized in that the said means for displacing said carriage comprise a beam (11) along which said carriage (10) is movable, and guiding means (25, 26, 28, 30) along which the said beam is movable substantially in a movement parallel to its length, drawing means (21, 22, 23, 24) for moving the said carriage (10) along the said beam (11) and drawing means (32, 33, 34) for moving the said beam (11) along the said guiding means (25, 26, 28, 30).

5. Device according to one of the above claims 3 and 4, characterized in that the said drawing means for moving the object from the carriage (10) up to the stowing rack and in the opposite direction are carried by the said carriage (10) and comprise a belt (35) provided with a finger (39) which engages into a recess in the said object in order to displace same, and of means for driving the said belt in both directions.

FIG.1

FIG. 2

FIG. 3

FIG. 4